# EUROPÄISCHE PATENTANMELDUNG

(11) **EP 3 614 346 A1**
(43) Veröffentlichungstag der Anmeldung: **26.02.2020**
(21) Anmeldenummer: 18189650.7
(22) Anmeldetag: 20.08.2018
(51) Int. Cl.: G07B 17/00, G06Q 50/32

(54) **VERFAHREN UND SYSTEM ZUR DIREKTEN FREIMACHUNG POSTALISCHER SENDUNGEN MITTELS DEZENTRALER IDENTIFIZIERUNG**

(71) Anmelder: Siemens Aktiengesellschaft, 80333 München (DE)
(72) Erfinder: Enghauser, Peter, 78465 Konstanz (DE)

(57) **Zusammenfassung**

Zur Freimachung einer durch einen Postdienstleister (8) zu befördernden Sendung (2) eines Absenders (1) wird ein Verfahren vorgeschlagen, das die bisherigen Nachteile der Freimachung mittels Briefmarken oder anderer an der Sendung anbringbaren Wertzeichen beseitigt.

Dazu wird ein photographisches Abbild (3) der zu befördernden Sendung (2) durch den Absender (1) generiert und an einen Identifizierungsserver (32) übermittelt. Im Identifizierungsserver (32) wird ein Code (4) erzeugt und anschliessend veranlasst der Absender (1) eine Entgeltung für die Beförderung der Sendung (2).

Nach erfolgter Aufgabe der zu befördernden Sendung (2) an den Postdienstleister (8) wird von diesem ein photographisches Abbild (3') sowie ein entsprechender Code (4') der aufgegebenen Sendung (2) generiert und überprüft (33), ob für diese aufgegebene Sendung (2) ein Code (4) bereits vorhanden ist. Bei Feststellung von Gleichheit der Codes (4, 4') erfolgt eine Überprüfung eines ausreichend geleisteten Entgeltes.

Bei Feststellung eines ausreichend geleisteten Entgeltes wird die aufgegebene Sendung (2) durch den Postdienstleister (8) befördert.

## Beschreibung

Die vorliegende Erfindung bezieht sich auf ein Verfahren zur Freimachung postalischer Sendungen gemäss den Patentansprüchen 1 und 2 sowie auf ein System zur Durchführung der vorgenannten Verfahren gemäß dem Patentanspruch 9.

Die Entgeltung der Benutzung postalischer Dienste (Zustellung von postalischen Sendungen und damit verbundene Zusatzdienste) durch einen Postdienstleister ist aufwändig und fehleranfällig, weil dazu indirekte Verfahren der Freimachung, wie Postwertzeichen (Briefmarken), Freistempel oder aufgedruckte elektronisch generierte Postwertzeichen eingesetzt werden.

Die Frankierung bzw. Freimachung - im Folgenden wird nur der synonyme Begriff «Freimachung» verwendet - postalischer Sendungen und Dienstleistungen sowie deren Verrechnung basiert heute im Wesentlichen auf:
a) Freimachung mittels vorausbezahlter Briefmarke;
b) Freimachung mittels Freistempler zuzüglich Barcode und Freistempler-Identität, vorausbezahlt oder mittels Abrechnung aufgrund eines Zählers (Frankiermaschine),
c) Freimachung mittels gedruckter Barcodes und anschliessender Zählung und/oder Wägung für eine Volumen- und/oder Gewicht-basierte Abrechnung.

Die Vergangenheit und Gegenwart zeigt, dass diese Vorgehensweise mangels Verifizierbarkeit von Freimachungen betrügerisch hintergangen werden kann und hintergangen wird, in dem
a) Briefmarken gefälscht werden,
b) Freistempler Barcodes mehrfach genutzt werden und
c) Barcodes kopiert werden.

Dies führt bei den Postdienstleistern zu signifikanten Verlusten und/oder zu hohen Investitionen zum Beispiel im Bereich des Designs und der Erkennung fälschungssicherer Briefmarken bzw. fälschungssicherer Wertzeichen.

Die Notwendigkeit elektronisch generierte Postwertzeichen auf die Postsendungen aufdrucken zu müssen, stellt speziell für private Nutzer eine besondere Hürde da.

Die Mehrfachverwendung solcher indirekten Freimachungen ermöglicht den Betrug und bedeutet für die Postdienstleister einen Ertragsverlust. Bisher mussten die Absender Briefmarken bei den Postdienstleistern kaufen, die diese zuvor aufwändig drucken und oft über Poststellen vertreiben mussten. Beim Befördern der Sendungen wurden die aufgeklebten Briefmarken physikalisch entwertet, um eine Mehrfach-Verwendung zu verhindern.

Frankiermaschinen erlauben es, Massen-Sendungen in kleinerem Umfang einzeln zu frankieren. Da die Frei-Stempel per Definition mehrfach verwendet werden, ist die Kontrolle einer Überverwendung besonders aufwändig.

In moderneren Varianten kommen elektronische Postwertzeichen zum Einsatz, die die Absender zB in Form eines Barcodes auf die Sendung aufdrucken. Die zentrale Generierung solcher elektronischer Briefmarken erfordert eine erhebliche Koordinierung (wenn zB in DE die Bundesdruckerei fälschungssichere Identitäten erzeugen muss) und schränkt die Absender mit ihren teils unterschiedlichen Anforderungen an Umfang bzw. Gültigkeitsdauer solcher Identitäten beträchtlich ein.

Vor allem für private Absender stellt das Aufdrucken einer kodierten Identität auf eine zu befördernde Sendungen ein erhebliches Problem da und kann durch mangelnde Druckqualität zu Problemen bei der Identifizierung durch den Postdienstleister führen.

In der europäischen Patentanmeldung EP18168757.5 mit dem Titel «Verfahren und System zur Freimachung postalischer Sendungen und zur Abrechnung einer Logistikleistung» [1] wird ein Verfahren und ein System offenbart, bei denen vorgenerierte elektronische Wertzeichen in einer Blockchain gespeichert und verwaltet werden, mit dem Ziel, dass für alle involvierten Dienstleister die Korrektheit der erfassten und verrechneten Logistikleistung transparent ist. Dieses Verfahren und System schützt jedoch nicht vor dem Auslesen solcher Wertzeichen und ist somit einem Missbrauch durch Dritte potentiell offen.

Der vorliegenden Erfindung liegt daher die Aufgabe zugrunde, ein fälschungssicheres Verfahren und System zur direkten Freimachung postalischer Sendungen durch den Absender bereitzustellen, das die vorstehend genannten Probleme behebt.

Diese Aufgabe wird durch das im Patentanspruch 1 für sogenannte Großauslieferer und durch das im Patentanspruch 2 für Einzelsendungen von Individualpersonen angegebene Verfahren gelöst. Des Weiteren wird die Aufgabe durch das im Patentanspruch 9 angegebene System zur Durchführung der vorgeschlagenen Verfahren gelöst. Vorteilhafte Ausgestaltungen der Erfindung sind in weiteren Ansprüchen angegeben.

Das erfindungsgemässe Verfahren zur Freimachung postalischer Sendungen weist für den Massenversand wie auch für den Versand einer einzelnen Sendung folgende gemeinsame Verfahrensschritte auf:
1. Identifizierung einer Sendung.
2. Freimachen der Sendung über eine direkte Verknüpfung der Leistung eines Entgeltes an den Postdienstleister mit der Identität der Sendung. Dabei wird keine indirekte Freimachung (wie zB Briefmarke) benötigt.
3. Speicherung der Freimachung und Identifizierung beim Postdienstleister, bis die Leistung erbracht ist. Das ist in aller Regel die einmalige Beförderung der betreffenden Sendung einschliesslich der Zustellung beim vorgesehenen Empfänger. Danach kann die gespeicherte Freimachung entsprechend der erbrachten Leistung entwertet oder reduziert werden für den Fall, wo das geleistete Entgelt höher ist, als das erforderliche Entgelt.

Die Identifizierung der zu befördernden Sendung kann dezentral und je nach Anwendungsfall unterschiedlich erfolgen:
a) Der Briefumschlag bzw. die Verpackung trägt bereits einen weltweit eindeutigen Barcode, der direkt vom Hersteller des Umschlages/Verpackung aufgedruckt wurde.
b) Der Absender (typischerweise ein Großauslieferer) generiert selber beim Bearbeiten einer Massensendung eindeutige Identifizierungen und druckt die entsprechenden Identitäten auf die zu befördernden Sendungen auf, beispielsweise als Barcode.
c) Frankiergeräte (typischerweise eingesetzt von Firmen) drucken Identitäten auf die Sendung auf, beispielsweise als Barcode oder als QR-Code.
d) Der Absender (typischerweise eine Individualperson) erzeugt ein photographisches Abbild der zu befördernden Sendung, und leitet dieses Abbild an einen Identifizierungsserver zur Generierung eines Codes, der aus diesem Abbild generiert wird. Der Identifizierungsserver muss über einen bestimmten Zeitraum in der Lage sein, für ein vom Postdienstleister generiertes photographisches Abbild der aufgegebenen Sendung, den gleichen Code zu generieren.

Bezüglich der auf zu befördernden Sendungen anzubringenden Identitäten sind es wenige Erzeuger (zB Hersteller von Briefumschlägen, Großauslieferer, Frankiergeräte) die dezentral Codes zur Identifizierung von solchen Sendungen generieren.

Diese Identitäten sollten möglichst eindeutig sein. Die Eindeutigkeit ist jedoch nicht zwingend notwendig, sondern schützt den Absender vor Missbrauch durch Dritte, die die gleiche Identität ohne Leistung eines Entgeltes verwenden wollen.

Die Eindeutigkeit des Codes kann zB durch das folgende Format mit den drei angegebenen Feldern erreicht werden:
ErzeugerId:ZählerId:ZusatzDaten.
Jeder Erzeuger besorgt sich dazu bei einem zentralen Vergabe-System eine eindeutige ErzeugerId, fügt für jede vorgenommene Identifizierung eine ZählerId hinzu (die nur noch für den Erzeuger selbst eindeutig sein muss) und kann optional noch weitere Daten (wie zB Absender oder Empfänger) in den Zusatzdaten hinzufügen.
Die ZählerId selbst kann zB aus Erzeugungsdatum, Erzeugungszeit und einem fortlaufenden Zähler innerhalb eines vorgegebenen Zeit-Intervalls bestehen.

Das zentrale Vergabe-System für "ErzeugerIds" kann eine einfache Datenbank sein, bei der neue "ErzeugerIds" registriert werden können. Sollte eine beantragte "ErzeugerId" bereits vergeben worden sein, kann ein Erzeuger solange eine andere "ErzeugerId" beantragen, bis die Registrierung in der genannten Datenbank erfolgreich ist.

In gleicher Weise ist auch ein Code aus dem photographischen Abbild 3' zu spezifizieren, der die folgenden Inhalte aufweist:
ErzeugerId:AbbildId:ZusatzDaten.
Das Feld ErzeugerId hat dabei einen Wert, der den postalischen Identifizierungsserver 32 selbst identifiziert. Das Feld "AbbildId" enthält einen aus dem photographischen Abbild generierten injektiven Wert. Optional können noch weitere Daten (wie zB Absender 1 oder Empfänger) in den Zusatz-daten hinzugefügt werden.

Somit weist für beide Fälle - also Massenversand mittels einer auf die Sendungen angebrachten Identität und Versand einer Sendung, die zur Codierung fotografiert wird - zu generierende Code folgende übergeordnete Struktur auf:
ErzeugerId:SendungsId:ZusatzDaten.
Das Feld "SendungsId" enthält im Falle einer Massensendung die Zähler Codierung der auf der betreffenden Sendung angebrachten Identität und im Fall einer fotografierten Einzelsendung die Codierung der Photographie der zu befördernden Sendung.

So können sich aus den vorgenannten Merkmalen die folgenden Vorteile zusätzlich ergeben:
i) Durch die Vermeidung von indirekten Freimachungen wie Briefmarken oder vom Massenmailer/Großausliefer selber erzeugten Frankaturen, können diese auch nicht gefälscht werden. Eine allfällige Duplizierung stört die weitere Verarbeitung nicht, da Sendungen mit duplizierten Identitäten, aber ohne entsprechende mehrfache Bezahlung, vom Postdienstleister ausgeschleust werden.
ii) Bei einer Übermittlung der direkten Freimachung, kann der Absender weitere Daten wie zB Absenderadresse oder Empfängeradresse mitübermitteln, und so die zu erbringende postalische Dienstleistung in einem sehr frühen Stadium spezifizieren, dh bevor die zu befördernde Sendung in die Obhut des Postdienstleisters kommt. Dies trägt wesentlich bei zur Effizienz und Sicherheit der zu erbringenden postalischen Dienstleistung.
iii) In einfachen Frankiergeräten, kann ein Vorrat von bereits freigemachten Identitäten gespeichert werden. «Freigemacht» heißt hier: Bereits beim Postdienstleister bezahlte Identitäten. Dieser Vorrat wird durch das Frankieren (also den Aufdruck zugeordneter Barcodes/QR-Codes usw.) aufgebraucht.
iv) Im Falle eines Verlusts oder Diebstahls des vorgenannten Vorrates von Identitäten, kann sich der rechtmäßige Besitzer nun an den Postdienstleister wenden und für eine Entwertung samt Rückerstattung aller noch unverbrauchter Freimachungen/Identitäten sorgen. Dazu braucht er nur eine Liste der ursprünglich gespeicherten Freimachungen. Diese neue Möglichkeit sichert nicht nur die in dem Frankiergerät gespeicherten Werte, sondern reduziert auch die Attraktivität eines Diebstahls, da ein entwendetes Frankiergerät so sehr schnell unbrauchbar wird.

Im Kontext der vorliegenden Erfindung beinhaltet somit der Begriff Identität einer zu befördernden Sendung:
i) Gesamtheit der Eigenschaften einer zu befördernden Sendung wie Zeichen auf der Sendung, Farbe und Dimension der Sendung. Diese Eigenschaften können beispielsweise durch ein photographisches Abbild erfasst werden.
ii) Zeichen, das auf eine zu befördernde Sendung aufgebracht wird und während der Beförderung der Sendung auf ihr verbleibt einschließlich der weiteren vor einer Beförderung der Sendungen erfassten Daten.

Die Erfindung wird nachfolgend anhand der Zeichnung näher erläutert. Dabei zeigt:
Figur 1 Verfahrensschritte für ein Ausführungsbeispiel der vorliegenden Erfindung;
Figur 2a Sendung mit einer vom Absender aufgebrachten Identität;
Figur 2b Sendung zur Identifizierung ohne eine besonders angebrachte Identität.

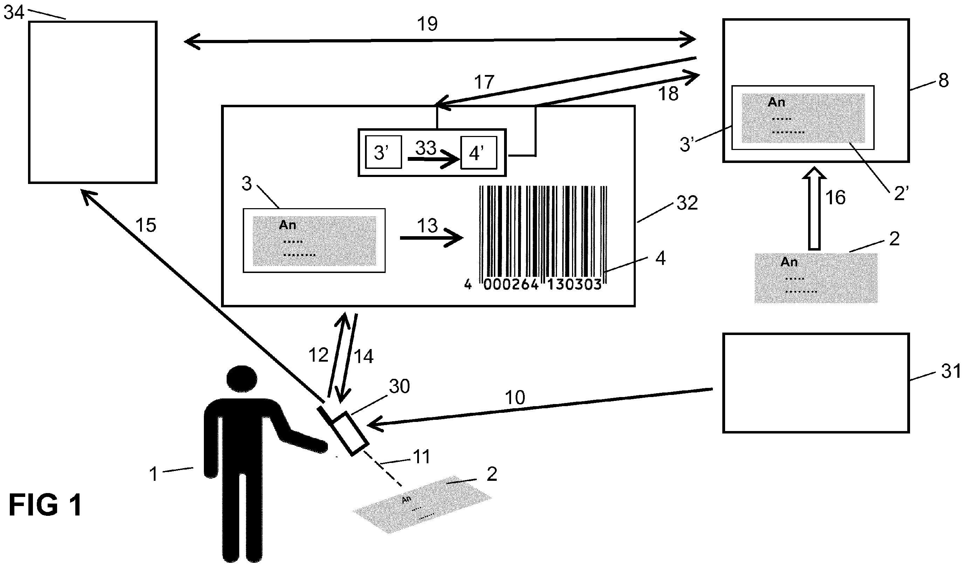

Figur 1 zeigt ein Ausführungsbeispiel der vorliegenden Erfindung für eine zu befördernde Sendung 2 von einem Absender 1. Diesem Ausführungsbeispiel ist zugrunde gelegt, dass für eine zu befördernde Sendung 2 weder eine Identität vorgedruckt wurde, noch ein Label - zB Briefmarke - aufgeklebt wurde. Die Interaktionen bzw. Verfahrensschritte zur Identifizierung einer zu befördernden Sendung sind folgende:
Der Absender 1 lädt (10) sich von einem Applikationsserver 31 eine Applikation des betreffenden Postdienstleisters 8 auf sein persönliches SmartPhone 30. Diese Applikation - auch «App» oder «Post App» oder «Frankatur App» genannt - wird, wie nachfolgend dargelegt, zur Freimachung (=Frankierung) einer zu befördernden Sendung 2 benutzt.

Der Absender 1 erzeugt mit der Applikation «App» auf seinem SmartPhone 30 ein photographisches Abbild 3 der zu befördernden Sendung 2 und sendet (12) dieses photographische Abbild 3 mittels der vorgenannten Applikation «App» zu einem Identifizierungsserver 32.

Der Identifizierungsserver 32 generiert (13) aus dem photographischen Abbild 3 einen Code 4. Statt Code 4 wird auch von einem sogenannten FingerPrint 4 gesprochen. In der FIG 1 ist rein illustrativ ein Strichcode bzw Barcode dargestellt. Es könnte ebenso gut auch ein QR-Code sein. Die konkrete Codierung ist solange unerheblich, als aus den photographischen Abbildern 3 ein injektiver Code 4 erzeugt wird. Im Identifizierungsserver 32 wird der so generierte Code 4 gespeichert und an das SmartPhone 30 mit der entsprechenden Applikation «App» zurückgesendet (14).

Die auf dem SmartPhone 30 aktive Applikation «App» unterstützt den Absender 1 bei der Ermittlung des Betrages des erforderlichen Entgelts, beispielsweise durch Eingabe des Formates und Gewichtes wie auch der Destination (Land) der zu befördernden Sendung 2. Dieser Betrag kann entweder auf die klassische Art an ein Konto des Postdienstleisters 8 überwiesen werden. Bevorzugt ist jedoch eine Überweisung 15 des erforderlichen Betrags mit Unterstützung durch die vorgenannte Applikation «App». Diese Applikation veranlasst eine entsprechende Gutschrift für den betreffenden Code 4 beim Bezahl- und Aktivierungssystem 34 des Postdienstleisters 8 und eine Belastung eines vom Absender 1 hinterlegten Kontos.

Nach der Überweisung des Entgelts an den Postdienstleister 8 aktiviert die Applikation «App» die zur Sendung 2 zugehörige Identität im Bezahl- und Aktivierungssystem 34. Der Absender 1 übergibt die Sendung 2 dem Postdienstleister 8 zur Beförderung. Beim Postdienstleister 8 erstellt zB eine Entwerte- und Sortiermaschine ein Abbild 3' der aufgegebenen Sendung 2' und versucht diese Sendung 2' hinsichtlich angebrachter Wertzeichen zu identifizieren. Da keine Wertzeichen erkannt werden, wird das Abbild 3' zum Identifizierungsserver 32 übermittelt (17). Im Identifizierungsserver 32 erfolgt eine Generierung (33) eines zugehörigen Codes 4'. Anschliessend wird im Identifizierungsserver 32 geprüft, ob ein gleicher Code 4 bereits gespeichert ist. Bei Feststellung von Gleichheit der beiden Codes 4 und 4' erfolgt in einem weiteren Schritt eine Überprüfung, ob ein ausreichend geleisteter Betrag als Entgelt für den entsprechenden Code 4 im Bezahl- und Aktivierungssystems 34 gebucht worden ist.

Bei Feststellung eines ausreichend geleisteten Gebührenbetrages wird die Beförderung der aufgegebenen Sendung 2 durch den Postdienstleister 8 freigegeben.

In der beiliegenden FIG 1 sind dazu die Meldungen 18 und 19 eingezeichnet. Dies hat rein beispielhaften Charakter. Denkbar ist auch eine Implementation, bei der der Identifikationsserver 32 direkt mit dem Bezahl- und Aktivierungssystem 34 des Postdienstleisters 8 kommuniziert und die Rückmeldung zur Freigabe der zu befördernden Sendung 2 entweder direkt vom Bezahl- und Aktivierungssystem 34 erfolgt (wie in der FIG 1 gezeichnet) oder via den Identifikationsserver 32.

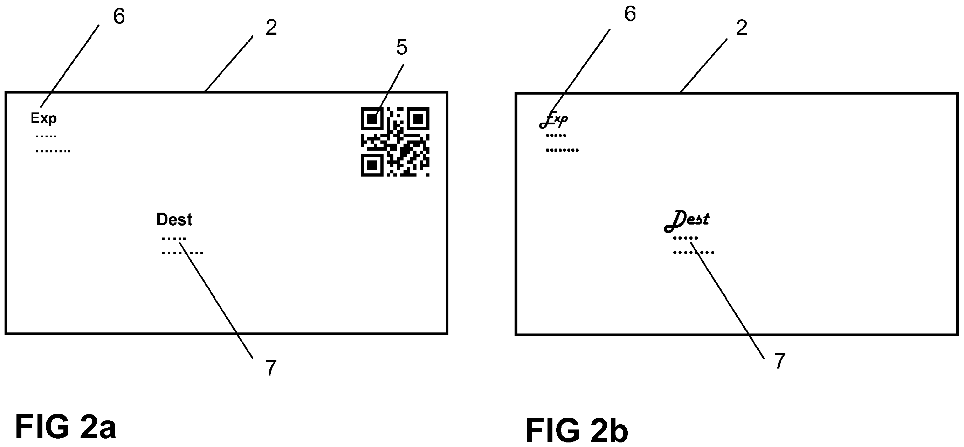

Gemäß der FIG 1 ist ein Ausführungsbeispiel für eine zu befördernde Sendung 2 gezeigt, wie sie in der FIG 2b dargestellt ist.

Ein Ausführungsbeispiel für Sendungen, wie sie in FIG 2a dargestellt ist unterscheidet sich dadurch, dass weder ein Smartphone 30 noch eine zugehörige Applikation «App» verwendet wird, sondern dass eine beim Grossauslieferer vorhandene Infrastruktur für die Erfassung der Sendungen vorhanden ist. Dazu brauchen die Sendungen 2 nicht einzeln erfasst zu werden, sondern es reicht aus, wenn die auf den Sendungen 2 angebrachte Identität 5 an einen Identifizierungsserver 32 zu übermitteln. Wie im Falle der Einzelsendungen generiert (13) der Identifizierungsserver 32 einen entsprechenden Code, der im vorgenannten Feld "SendungsId" abgelegt wird.

Für beide Anwendungsfälle gemäss den FIG 2a und 2b enthalten die Sendungen 2 mindestens eine Zieladresse 7 und optional eine Absenderadresse 6.

Für beide Anwendungsfälle kann für eine vorgenommene Beförderung einer Sendung noch folgender Verfahrensschritt hinzukommen.
Das Entgelt wird im Voraus geleistet und es wird geprüft, ob für die aufgegebene Sendung ein ausreichendes Entgelt geleistet wurde. Im weiteren Verlauf der Beförderung der aufgegebenen Sendung kann sich herausstellen, dass das geleistete Entgelt über dem tatsächlich erforderlichen Entgelt liegt. Dies kann zB auftreten bei Anwendung einer Rabattierung, das ist besonders relevant für Grossauslieferer. In einem solchen Fall wird im Bezahl- und Aktivierungssystem das geleistete Entgelt nicht auf null sondern auf einen Restwert gesetzt, eine sogenannte Reduzierung des Entgeltguthabens des Absenders 1.

Das hiermit beschriebene Ausführungsbeispiel für Sendungen 2 mit einer photographischen Aufnahme und Weiterleitung eines Abbildes 3 der Sendung 2 schränkt die vorliegende Erfindung nicht ein. Wie vorstehend beschrieben, ist dies auch anwendbar für Großauslieferer. Andere Kombinationen von Meldungsflüssen können vom Fachmann je nach Implementierungsvorgaben vorgenommen werden, ohne den Schutzumfang der Erfindung zu verlassen.

### Liste der Bezugszeichen, Glossar

- 1: Absender
- 2: zu befördernde Sendung
- 2': aufgegebene Sendung
- 3: Vom Absender erstelltes photographisches Abbild der zu befördernden Sendung
- 3': Vom Postdienstleister erstelltes photographisches Abbild der aufgegebenen Sendung
- 4: Code der zu befördernden Sendung, Code des photographischen Abbildes der zu befördernden Sendung
- 4': Code der aufgegebenen Sendung, Code des photographischen Abbildes der aufgegebenen Sendung
- 5: Identität
- 6: Absenderadresse, expediteur
- 7: Empfänger, destinataire
- 8: Postdienstleister
- 10: Download einer Applikation
- 11: Photographische Aufnahme einer zu befördernden Sendung
- 12: Übermittlung des photographischen Abbildes der zu befördernden Sendung
- 13: Generierung eines Fingerprint/Codes
- 14: Übermittlung des generierten Codes
- 15: Auslösung eines Bezahlvorganges zugunsten des Postdienstleisters
- 16: Übergabe der Sendung an den Postdienstleister
- 17: Übermittlung der durch den Postdienstleister generierten photographischen Aufnahme der Sendung
- 18: Übermittlung des generierten Codes für den Fall, wo der Fingerprint bzw. Code der zu befördernden Sendung gefunden wurde
- 19: Nachrichtenaustausch zur Überprüfung eines ausreichenden geleisteten Entgeltes
- 30: Smart-Phone
- 31: Applikationsserver eines Postdienstleisters
- 32: Identifizierungsserver
- 33: Generierung eines Codes aus dem durch den Postdienstleister generierten photographischen Aufnahme und Überprüfung, ob für die aufgegebene Sendung ein Code bereits vorhanden ist
- 34: Bezahlsystem des Postdienstleisters

### Quellen, Literaturliste

[1] Europäische Patentanmeldung EP18168757.5;
   Titel: «Verfahren und System zur Freimachung postalischer Sendungen und zur Abrechnung einer Logistikleistung»;
   Anmeldetag: 23.04.2018;
   Anmelderin: Siemens Aktiengesellschaft, 80333 München.

## Patentansprüche

1. Verfahren zur Freimachung einer durch einen Postdienstleister (8) zu befördernden Sendung (2) eines Absenders (1) mit den Verfahrensschritten:
a) - Generierung und Anbringen einer Identität (5) an die zu befördernde Sendung (2) durch den Absender (1);
b) - Übermittlung der Identität (5) der zu befördernden Sendung (2) an einen Identifizierungsserver (32);
c) - Generierung (13) eines mit einem aus der Identität (5) abgeleiteten Code (4) und Speicherung des Codes (4) im Identifizierungsserver (32);
d) - Auslösung einer Leistung eines Entgeltes in einem Bezahl- und Aktivierungssystem (34) des Postdienstleisters (8) für die zu befördernde Sendung mit dem aus der Identität (5) abgeleiteten Code (4);
e) - Aufgabe der zu befördernden Sendung (2) an den Postdienstleister (8);
f) - durch den Postdienstleister (8) generieren eines aus der Identität (5) der aufgegebenen Sendung (2) abgeleiteten Codes (4') und Überprüfung (33), ob für diese aufgegebene Sendung (2) ein Code (4) bereits vorhanden ist;
g) - Überprüfung im Bezahl- und Aktivierungssystem (34), ob für die aufgegebene Sendung (2) ein ausreichendes Entgelt geleistet wurde;
h) - bei Feststellung eines ausreichend geleisteten Entgeltes Beförderung der aufgegebenen Sendung (2) durch den Postdienstleister (8).

2. Verfahren zur Freimachung einer durch einen Postdienstleister (8) zu befördernden Sendung (2) eines Absenders (1) mit den Verfahrensschritten:
a) - Generierung (11) eines photographischen Abbildes (3) der zu befördernden Sendung (2) durch den Absender (1);
b) - Übermittlung des photographischen Abbildes (3) der zu befördernden Sendung (2) an einen Identifizierungsserver (32) ;
c) - Generierung (13) eines Codes (4) aus dem photographischen Abbild (3) und Speicherung des Codes (4) im Identifizierungsserver (32);
d) - Auslösung einer Leistung eines Entgeltes in einem Bezahl- und Aktivierungssystem (34) des Postdienstleisters (8) für die zu befördernde Sendung (2) mit dem Code (4);
e) - Aufgabe der zu befördernden Sendung (2) an den Postdienstleister (8);
f) - Generierung eines Codes (4') aus einem vom Postdienstleister (8) generierten photographischen Abbildes (3') der aufgegebenen Sendung (2) und Überprüfung (33), ob für diese aufgegebene Sendung (2) ein Code (4) bereits vorhanden ist;
g) - bei Feststellung von Gleichheit der Codes (4, 4') Überprüfung eines ausreichend geleisteten Entgeltes mittels des Bezahl- und Aktivierungssystems (34);
h) - bei Feststellung eines ausreichend geleisteten Entgeltes Beförderung der aufgegebenen Sendung (2) durch den Postdienstleister (8).

3. Verfahren nach Anspruch 2,
**dadurch gekennzeichnet, dass**
für die Generierung (11) des photographischen Abbildes (3) der zu befördernden Sendung (2) durch den Absender (1) und für die Übermittlung des photographischen Abbildes (3) der zu befördernden Sendung (2) den Identifizierungsserver (32) eine Applikation auf einem SmartPhone (30) verwendet wird.

4. Verfahren nach Anspruch 3,
**dadurch gekennzeichnet, dass**
vor Ausführung des Verfahrens eine Applikation von einem auf einem Applikationsserver (31) des Postdienstleisters (8) auf das SmartPhone (30) ladbar ist.

5. Verfahren nach einem der Ansprüche 1 bis 4,
**dadurch gekennzeichnet, dass**
der im Verfahrensschritt c) generierte Code (4) folgende Struktur mit wenigstens zwei Feldern aufweist: ErzeugerId:SendungsId, wobei
- das Feld ErzeugerId den Erzeuger der auf der Sendung (2) angebrachten Identität (5) oder den Identifizierungsserver (32) identifiziert;
- das Feld SendungsId eine Codierung der angebrachten Identität (5) der zu befördernden Sendung (2) oder ein codiertes Abbild der zu befördernden Sendung (2) enthält.

6. Verfahren nach Anspruch 5,
**dadurch gekennzeichnet, dass**
der im Verfahrensschritt c) generierte Code (4) folgende Struktur mit drei Feldern aufweist: ErzeugerId:SendungsId:Zusatzdaten, wobei
- das Feld Zusatzdaten Angaben zur Absenderadresse (6) und Zieladresse (7) der zu befördernden Sendung enthält.

7. Verfahren nach einem der Ansprüche 1 bis 6,
**dadurch gekennzeichnet, dass**
im Verfahrensschritt g) im Bezahl- und Aktivierungssystem (34) das geleistete Entgelt um das erforderliche Entgelt reduziert wird.

8. Verfahren nach einem der Ansprüche 1 bis 7,
**dadurch gekennzeichnet, dass**
bei den Verfahrensschritten g) oder h) bei der Feststellung einer Ungleichheit der Codes (4, 4') oder bei Feststellung eines unzureichend geleistetes Entgeltes die aufgegebene Sendung (2) nicht befördert wird und ausgeschleust wird.

9. System zur Freimachung einer durch einen Postdienstleister (8) zu befördernden Sendung (2) eines Absenders (1) umfassend Mittel (32, 33, 34) zur Ausführung der Verfahrensschritte des Verfahrens nach einem der Ansprüche 1 bis 8.
